Europäisches Patentamt

European Patent Office

Office européen des brevets

(11) Publication number: 0 519 286 A1

## EUROPEAN PATENT APPLICATION

(21) Application number: 92109590.7

(22) Date of filing: 05.06.92

(51) Int. Cl.⁵: F02D 41/22, F02D 41/26,
G01D 1/00

(30) Priority: 11.06.91 IT TO910446

(43) Date of publication of application:
23.12.92 Bulletin 92/52

(84) Designated Contracting States:
DE ES FR GB

(71) Applicant: WEBER S.r.l.
Corso Marconi, 20
I-10125 Torino(IT)

(72) Inventor: Serra, Gabriele
Via Orsani, 43
I-40068 S. Lazzaro di Savena(IT)
Inventor: Matteucci, Daniele
Via Pasteur, 3
I-40100 Bologna(IT)

(74) Representative: Jorio, Paolo et al
STUDIO TORTA Società Semplice Via Viotti 9
I-10121 Torino(IT)

(54) System for monitoring electronic engine management controller.

(57) The system (1) monitors apparatus (2) for management of a cyclic motion in a machine (3) and comprises: means (21) for decoding the angular position in the cycle by means of the detection in the machine (3) of first synchronising signals; means (22) which detect second digital signals transmitted from and to the apparatus (2), and which count the pulses of each of the said second signals in dependence on a specific angular value of the cycle to generate third signals which, in each cycle, have a pulse value proportional to the duration of the pulses of the second signals in each cycle; means (24) operable to convert the third signals into analogue signals; and means (27) operable to record the analogue signals on a support according to a system of cartesian axes.

Fig.1

The present invention relates to a system for monitoring electrical apparatus for management of a cyclic motion.

The object of the present invention is that of providing a monitoring system for electrical apparatus for management of a cyclic motion which permits the angular position in the cycle of a plurality of pulse signals, converted into analogue signals, to be plotted.

Further objects and advantages of the present invention will become evident during the course of the following description.

According to the present invention there is provided a monitoring system for electrical apparatus for management of a defined cyclic motion in a machine, characterised by the fact that it comprises:

first means for decoding the angular position of the cycle by detecting first synchronising signals in the said machine;

second means at which arrive a plurality of second digital signals transmitted from and to the said apparatus, and operable to count in a system of cartesian axes the pulses of each of the said second signals in dependence on a specific angular value in the cycle to generate third signals which, in each cycle, have a pulse of value proportional to the duration of the pulses of the said second signals in each cycle;

third means operable to convert the said third signals into analogue signals; and

fourth means operable to record the said analogue signals in a system of cartesian axes on a suitable support.

For a better understanding of the present invention a preferred embodiment will now be described, purely by way of non-limitative example, with reference to the attached drawings, in which:

Figure 1 is a block diagram of a system formed according to the principles of the present invention;

Figure 2 is a block diagram of a part of the system of Figure 1; and

Figure 3 illustrates a plurality of diagrams relating to the plots of detected and converted electrical signals.

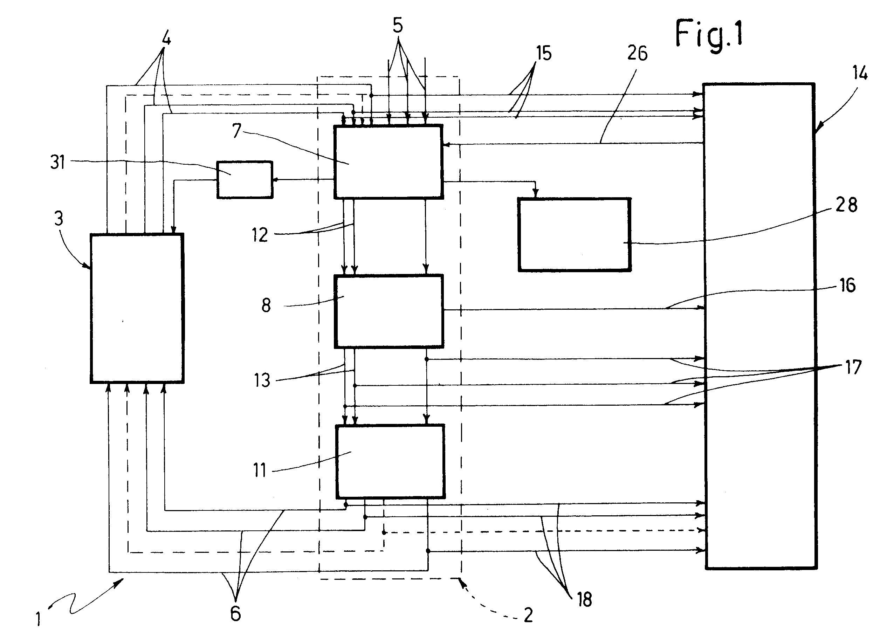

Figure 1 is a block schematic diagram which represents a system 1 for monitoring an electronic central processing unit 2 for management of a machine 3 in which the cyclic motion is present. The machine 3 can be an internal combustion engine of a motor vehicle or an automatic machine in which there is a cyclic motion, for example, of a main shaft. The system 1 provides for conversion of all the digital signals exchanged between the various members, actuators, blocks and units or detected in these, into analogue signals referred to any geometric point in the cyclic motion in a system of cartesian axes. In this way it is possible to determine an angular trace of the converted values referred to the cycle.

With reference to Figure 1, from the block which represents the machine 3 extend a plurality of electrical lines 4 which lead to the central control unit 2 and which transfers thereto respective electrical signals relating to the operating conditions of the members of the machine 3, to quantities measured in this machine, and to the angular position of the machine shaft 3 which follows the cyclic motion. All these signals can be subdivided into synchronising signals, synchronised signals, and asynchronous signals.

By "synchronising signals" are meant signals by means of which it is possible to arrive at the angular position of the cyclic motion. For example in a motor vehicle engine the angular position of the cyclic motion is determined by the position of the engine crank shaft and by the position of the cam shaft; which can be represented by signals detected, as is known, by a revolution counter and a phase sensor.

By "synchronised signals" is meant those digital signals which arise from actuators of the machine 3 in correspondence with a determined angular phase of the cyclic motion. For example, in a motor vehicle engine the signals for controlling the fuel injection and the firing of the spark plugs, and the signals detecting detonation are synchronised signals.

By "asynchronous signals" is meant those digital signals which, whilst not being tied to the cyclic motion, are to be evaluated because of the influence which they can have on the cycle. For example in a motor vehicle engine the asynchronous signals are the signals which detect a failure of the spark plugs to fire, signals for monitoring supercharging, signals for monitoring the active carbon filter etc.

Also connected to the central control unit 2 are a plurality of electrical lines 5 which transfer respective electrical signals relating to operator controls such as, for example in a motor vehicle engine, the control signal on the accelerator pedal, and signals relating to the operating conditions of members or external apparatus fitted to the machine 3 such as, for example in the case of an engine, the signal relating to the battery voltage. From the central control unit 2 extend a plurality of electrical lines 6 which transmit to the machine 3 digital control signals which may be of synchronised type and therefore tied to the cycle, such as, for example, signals for controlling the fuel injection and the ignition, or which may be of asynchronous type and therefore not tied to the cycle, such as, for example, signals for controlling control valves or particular actuators.

For a better understanding for the operation of the system 1, in Figure 1 the central control unit 2 has been schematical subdivided into three blocks of which a block 7 represents a connection interface and a central processing and data memorisation unit, a block 8 represents the unit in which the digital signal for control of a command is determined by means of a transfer function, and a block 11 represents the unit in which the command signal sent to the actuator of the machine 3 is generated. The lines 4 and 5 are connected to the block 7 whilst the lines 6 extend from the block 11. In this way it is possible to define in the central control unit 2 the above specified input signals, the command control signals (that is the processed signals), and the output signals represented by command signals that is to say the signals effectively sent to the actuators. For this there are illustrated electrical lines 12 between the block 7 and the block 8 and electrical lines 13 for transfer of the command control signals between the block 8 and the block 11.

With reference to Figure 1, the system 1 includes a unit 14 to which the input signals applied to the central control unit through the lines 4 are supplied via lines 15, a signal relating to the transfer function applied in the block 8 are supplied via an electrical line 16, the command control signals are applied via lines 17, and the output signals from the central control unit 2 are applied via electrical lines 18. The unit 14 constitutes the member which converts all the digital signals which are supplied to it into analogue signals related to the cycle system of cartesian axes.

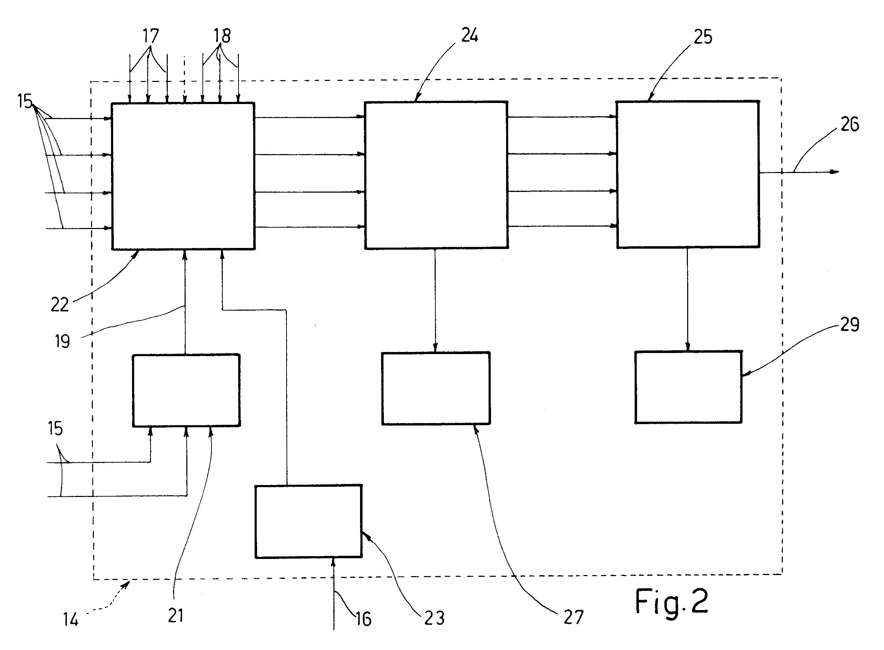

With reference to Figure 2, the unit 14 comprises:

a block 21 which represents a decoder for decoding the angular position of the cycle, for which the lines 15 relating to the synchronising signals lead to this decoder;

a block 22 which represents a synchronous counter to which all the remaining lines 15 and the lines 17 and 18 are connected, together with a line 19 which extends from the block 21 and which relates to a phase angle signal of the cycle;

a block 23 which represents a calculating unit for which line 16 is connected thereto, and which is connected to the block 22;

a block 24 which represents a digital-to-analogue converter and which converts all the digital signals from the output of the block 22 into analogue signals;

a block 25 to which the signals from the output of the block 24 are sent and which represents a unit for monitoring errors possibly existing between given signals as will be described hereinbelow, and which is operable to transmit the error signal to the block 7 of the central control unit 2 via an electrical line 26;

a block 27 connected to the block 24 and operable to record, all the analogue signals under examination, on a video and/or paper and/or magnetic tape, and according to a system of cartesian axes, and

a block 29 connected to the block 25 and operable to display the error signal graphically or numerically on video and/or paper and/or magnetic tape.

With reference to Figure 1, a block 28 is connected to the central control unit 2 via the block 7, by means of which the component of the machine 3 which is functioning incorrectly is indicated and a block 31 via which it is possible to intervene in the machine 3 for adjustment of various actuators for the purpose of correcting the errors detected in the block 25.

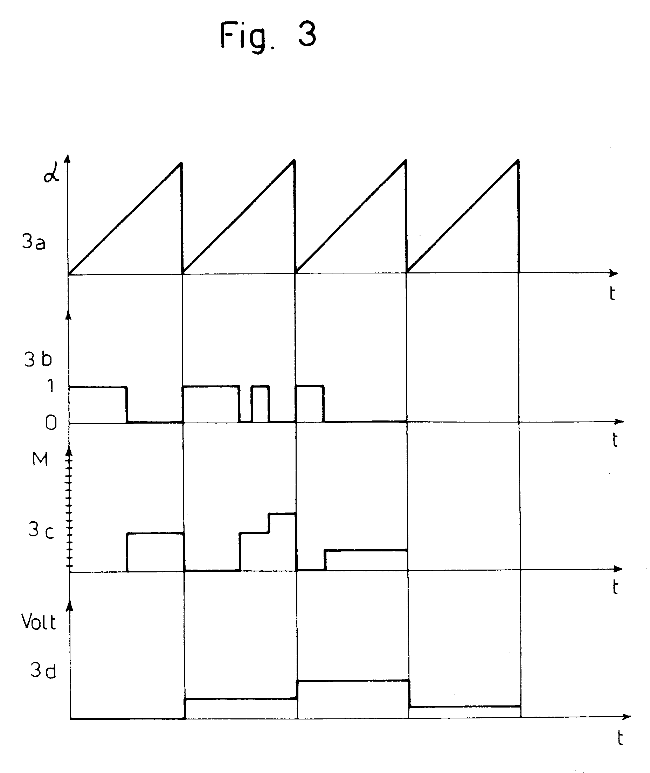

With reference to Figure 3, the cartesian axis diagram indicated 3a illustrates the cycle of motion, that is the output signal from the block 21. In the diagram 3a time t is plotted along the abscissa and the angle $\alpha$ is plotted along the ordinate. The cartesian axis diagram indicated 3b is representative of an input signal in the block 22. These synchronised or asynchronous signals are defined by a square wave between 0 and 1. In diagram 3b time t is plotted along the abscissa and a value between 0 and 1 is plotted along the ordinate. The cartesian axis diagram indicated 3c represents the output signal from the block 22, that is the processing performed by the block 22 on the input signal. In diagram 3c time is plotted along the abscissa and the value M which represents a number proportional to the duration of the pulse of the signal illustrated in diagram 3b in a given cycle is plotted on the ordinate. In each cycle the value M returns to 0. In summary the block 22 is programmed to count the pulses of each signal as a function of a specific angular value of the cycle. If in a given cycle the input signal to the block 21 is defined by two pulses (typical case of a principal injection and a supplementary injection in the same cycle), in diagram 3c the quantity M first assumes a value proportional to the duration in the cycle of the first pulse, and then a value which is the sum of the first value and a value proportional to the duration of the second pulse in the same cycle.

The cartesian axis diagram indicated 3d represents the signal at the output from the block 24 and is therefore representative of the processing performed on the input signal. In diagram 3d time t is plotted along the abscissa and a value in volts is plotted along the ordinate. The block 24 converts the value M assumed by the signal in diagram 3c into the value of an electrical quantity such as for example voltage. The value in the volts assumed by the signal is proportional to the value M assumed in the preceding cycle. The value in volts remains constant during the whole of the cycle and is increased or reduced in the subsequent cycle by a quantity proportional to the increase or reduction in the value M defined in the preceding cycle.

From what has been described above the advantages achieved by the embodiment of the present invention will be apparent.

In particular, all the digital signals transmitted from and to the central control unit 2 and the signals processed by this can be converted into analogue signals referred to the cycle of motion of the machine. It will be evident that the analogue signal diagrams shown on cartesian axis and in correlation with the cycle of motion are easy to understand and therefore can be analysed and studied with greater facility. It is thus possible to perform a series of comparisons between input signals to the central control unit 2, the signals calculated by this, and the signals sent to the actuators. All these comparisons are achieved taking the cyclic motion into account so that it is possible to identify and monitor the influence of the cyclic motion on the work of the central control unit 2 and on the operation of the actuators. Moreover with this comparisons it is possible to detect the intervention time of the central control unit and the actuators for the purpose of identifying possible mistimings.

By processing the compared data it is possible to identify any component of the machine which has an incorrect function and replacement of which is necessary. Intervention by the central control unit itself for adjustment of the actuator is also possible, and finally it is possible to monitor the effectiveness of the management programmed defined in the central control unit. For this purpose, by means of the block 23, it is possible to monitor the calculation performed by the block 8 for determination of the command control signals. All the data can be memorised and processed by an electronic computer from which it is possible to request not only the comparison between various signals as indicated above, but also the possible interactions between signals relating to different actuators, and a statistical evaluation of the errors detected. By this comparison it is possible to take into account also signals which come from outside relating to operator commands, conditions of members fitted to the machine, ambient conditions, ground conditions for a motor vehicle etc.

As appears evident, the embodiment of the system of the invention can be used in a wide variety of ways given that the system can be an instrument for technical assistance connected in parallel directly to the central control unit, a research and development instrument connected to a computer, or an instrument connected to a data acquisition unit for durability and reliability tests on the components of the machine and the central control unit.

Finally it is clear that the system 1 described and illustrated here can have modifications and variations introduced thereto with by this departing from the protective ambit of the present invention.

**Claims**

1. A system for monitoring electrical apparatus (2) for management of a cyclic motion in a machine (3), characterised by the fact that it comprises:

   first means (21) for decoding the angular position in the cycle by detecting first synchronising signals in the said machine (3);

   second means (21) at which arrive a plurality of second digital signals transmitted from and to the said apparatus (2), and operable to count, in a system of cartesian axes, the pulses of each of the said second signals as a function of a specific angular value of the cycle to generate third signals which have in each cycle a pulse the value of which is proportional to the duration of the pulses of the said second signals in each cycle;

   third means (24) operable to convert the said third signals into analogue signals; and

   fourth means (27) operable to record the said analogue signals on a suitable support with reference to a system of cartesian axes.

2. A system according to Claim 1, characterised by the fact that the said second signals relate to operating conditions of parts of the said machine (3), to quantities measured therein, and to the angular position of the cyclic motion; all these signals can be subdivided into synchronising signals, synchronised signals that is signals tied to the cycle, and asynchronous signals that is signals not tied to the cycle.

3. A system according to Claim 1 and/or Claim 2, characterised by the fact that the said second signals relate to synchronised and asynchronous signals sent from the said apparatus (2) to actuator members of the said machine (3).

4. A system according to at least one of the preceding Claims, characterised by the fact that the said second signals relate to synchronised and asynchronous control signals processed in the said apparatus (2).

5. A system according to any preceding Claim, characterised by the fact that it includes fifth means (23) operable to receive information relating to the transfer function utilised in the said apparatus (2) for calculating the said control signals, and operable on the basis of the said signals transmitted from the said machine (3) to the said apparatus (2) to perform itself a calculation of the said control signals; the said control signals calculated by the said fifth means (23) also being counted by the said second means (22), converted into analogue signals by the said third means (24), and recorded by the said fourth means (27).

6. A system according to Claim 5, characterised by the fact that it includes sixth means (25) operable to compare the said analogue signals relating to the said actuation signals transmitted from the said apparatus (2) to the parts of the said machine (3) with the said analogue signals corresponding to the said signals relating to the operation of these parts and transmitted from the said machine (3) to the said apparatus (2), and operable to generate an error signal transmitted to the said apparatus (2).

7. A system according to Claim 6, characterised in that the said sixth means (25) are operable to compare the said analogue signals relating to the said control signals processed by the said apparatus (2) with the said analogue signals relating the said signals transmitted from the said apparatus (2) to parts of the said machine (3), and operable to generate an error signal transmitted to the said apparatus (2).

8. A system according to Claim 7, characterised in that the said sixth means (25) are operable to compare the said analogue signals relating to the said control signals processed by the said apparatus (2) with the said analogue signals relating to the said signals processed by the said fifth means (23), and operable to generate an error signal transmitted to the said apparatus (2).

9. A system according to any one of Claims from 6 to 8, characterised by the fact that it includes seventh means (29) operable to display the said error signal on video and/or paper graphically or numerically.

10. A system according to any of Claims from 6 to 9, characterised by the fact that it includes eighth means (28) controlled by the said apparatus (2), operable to process the said error signal and to indicate the part of the machine (3) to which the said error signal relates.

11. A system according to Claim 10 when dependent on Claims 8 and 9, characterised by the fact that the said eighth means (28) are operable to indicate the block of the said apparatus (2) to which the said error signal relates.

12. A system according to Claim 10, characterised by the fact that it includes ninth means (31) controlled by the said apparatus (2) and operable to adjust the parts of the said machine (3) to cancel the said error signals.

13. A system according to any preceding Claim, characterised by the fact that the said support for recording the said analogue signals is preferably constituted by a video and/or by a paper and/or magnetic support.

14. A system according to any preceding Claim, characterised by the fact that it includes tenth means for memorisation of all the said analogue signals and the said error signals.

Fig.1

EP 0 519 286 A1

Fig.2

# Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN vol. 14, no. 452 (P-1112)27 September 1990 & JP-A-21 79 966 ( SONY CORP ) 12 July 1990 * abstract * | 1,13 | F02D41/22 F02D41/26 G01D1/00 |
| A |  --- | 2-12,14 | |
| Y | PATENT ABSTRACTS OF JAPAN vol. 8, no. 20 (M-271)(1457) 27 January 1984 & JP-A-58 180 735 ( NIHON DENSHI KIKI KK ) 22 October 1983 * abstract * | 1,13 | |
| A | --- PATENT ABSTRACTS OF JAPAN vol. 10, no. 102 (P-448)18 April 1986 & JP-A-60 235 203 ( NIPPON DENKI KK ) 21 November 1985 * abstract * | 1-14 | |

TECHNICAL FIELDS SEARCHED (Int. Cl.5)

G01D
F02D

The present search report has been drawn up for all claims

| Place of search | Date of completion of the search | Examiner |
|---|---|---|
| THE HAGUE | 05 OCTOBER 1992 | CHAPPLE I.D. |

EPO FORM 1503 03.82 (P0401)